# EUROPEAN PATENT APPLICATION

(11) **EP 3 281 774 A1**
(43) Date of publication of application: **14.02.2018**
(21) Application number: 15888541.8
(22) Date of filing: 01.12.2015
(51) Int. Cl.: B29C 65/16, F01M 13/04, F02F 7/00

(54) **SYNTHETIC RESIN WELDED BODY AND MANUFACTURING METHOD THEREFOR**

(30) Priority: 07.04.2015 JP 2015078388
(71) Applicant: Taiho Kogyo Co., Ltd, Toyota-shi, Aichi 471-8502 (JP)
(72) Inventor: UENO, Yuzo, Toyota-shi Aichi 471-8502 (JP); MATSUI Shinya, Toyota-shi Aichi 471-8502 (JP); KAWAHARA Masahiro, Toyota-shi Aichi 471-8502 (JP)
(74) Representative: Kuhnen & Wacker
(86) International application number: PCT/JP2015/083699
(87) International publication number: WO 2016/163050

(57) **Abstract**

There is provided a synthetic resin welded body and a method of manufacturing the same, in which it is possible to make only a portion of an absorption-side synthetic resin part to be welded likely to melt in laser welding.

The synthetic resin welded body includes: a laser light absorbing oil passage forming member 120 (absorption-side synthetic resin part); and a laser light transmissive baffle plate 110 (transmission-side synthetic resin part) which is laid over the oil passage forming member 120 and laser-welded in this state. The baffle plate 110 is formed so that a welded area 111 which is laser-welded to the oil passage forming member 120 is higher in laser transmittance than a non-welded area 112 which is the other area.

## Description

### TECHNICAL FIELD

The present invention relates to a synthetic resin welded body formed by welding synthetic resin parts with each other and a method of manufacturing the same.

### BACKGROUND ART

Conventionally, there is a known technique of a synthetic resin welded body formed by welding synthetic resin parts with each other. An example of the technique is disclosed in Patent Literature 1.

In Patent Literature 1, a cylinder head cover including a baffle plate in a rectangular flat plate shape and a flow passage forming member which is laid over the baffle plate from below to form an oil passage is disclosed. The baffle plate and the flow passage forming member are welded to each other on their laid-over faces.

However, in the structure described in Patent Literature 1, in radiating laser light from a side of the baffle plate to the flow passage forming member to weld them to each other, displacement of a laser scanning position and increase in a laser radiation diameter may cause radiation of the laser to a portion other than a portion of the oil passage forming member (absorption-side synthetic resin part) to be welded. As a result, the portion of the oil passage forming member which should not melt may melt unintentionally.

### CITATION LIST

### PATENT LITERATURE

Patent Literature 1: Japanese Patent Application Laid-open No. 2007-127014

### SUMMARY OF INVENTION

### TECHNICAL PROBLEM

The present invention has been made with the above-described circumstances in view and it is an object of the invention to provide a synthetic resin welded body and a method of manufacturing the same, in which it is possible to make a portion of an absorption-side synthetic resin part to be welded likely to melt in laser welding.

### SOLUTION TO PROBLEM

The problem to be solved by the present invention is as described above and solutions to the problem will be described next.

A synthetic resin welded body according to an aspect of the invention includes: a laser light absorbing absorption-side synthetic resin part; and a laser light transmissive transmission-side synthetic resin part which is laid over the absorption-side synthetic resin part and laser-welded in this state. The transmission-side synthetic resin part is formed so that a welded area which is laser-welded to the absorption-side synthetic resin part is higher in laser transmittance than a non-welded area which is the other area.

In the synthetic resin welded body according to the aspect of the invention, in the transmission-side synthetic resin part, the welded area is formed to be smaller in thickness than the non-welded area so that the welded area is higher in laser transmittance than the non-welded area.

In the synthetic resin welded body according to the aspect of the invention, in the transmission-side synthetic resin part, the non-welded area is colored so that the welded area is higher in laser transmittance than the non-welded area.

In the synthetic resin welded body according to the aspect of the invention, in the transmission-side synthetic resin part, the welded area is made of material which is higher in laser transmittance than material for the non-welded area so that the welded area is higher in laser transmittance than the non-welded area.

In the synthetic resin welded body according to the aspect of the invention, the transmission-side synthetic resin part is a baffle plate which is disposed on a cylinder head cover and the absorption-side synthetic resin part is an oil passage forming member which includes a recessed portion recessed to an opposite side from the baffle plate and which is fixed to one face of the baffle plate to thereby form an oil passage with the recessed portion and the baffle plate.

A method of manufacturing a synthetic resin welded body according to another aspect of the invention includes: an absorption-side synthetic resin part preparing step of preparing a laser light absorbing absorption-side synthetic resin part; a transmission-side synthetic resin part preparing step of preparing a laser light transmissive transmission-side synthetic resin part; a disposing step of laying the absorption-side synthetic resin part and the transmission-side synthetic resin part over each other; and a laser welding step of radiating laser light from a side of the transmission-side synthetic resin part to melt the absorption-side synthetic resin part to thereby weld the absorption-side synthetic resin part and the transmission-side synthetic resin part to each other to obtain the synthetic resin welded body. The transmission-side synthetic resin part is formed so that a welded area which is laser-welded to the absorption-side synthetic resin part is higher in laser transmittance than a non-welded area which is the other area.

In the method of manufacturing the synthetic resin welded body according to the other aspect of the invention, in the transmission-side synthetic resin part, the welded area is formed to be smaller in thickness than the non-welded area so that the welded area is higher in laser transmittance than the non-welded area.

In the method of manufacturing the synthetic resin welded body according to the other aspect of the invention, in the transmission-side synthetic resin part, the non-welded area is colored so that the welded area is higher in laser transmittance than the non-welded area.

In the method of manufacturing the synthetic resin welded body according to the other aspect of the invention, in the transmission-side synthetic resin part, the welded area is made of material which is higher in laser transmittance than material for the non-welded area so that the welded area is higher in laser transmittance than the non-welded area.

In the method of manufacturing the synthetic resin welded body according to the other aspect of the invention, the transmission-side synthetic resin part is a baffle plate which is disposed on a cylinder head cover and the absorption-side synthetic resin part is an oil passage forming member which includes a recessed portion recessed to an opposite side from the baffle plate and which is fixed to one face of the baffle plate to thereby form an oil passage with the recessed portion and the baffle plate.

### ADVANTAGEOUS EFFECTS OF INVENTION

As effects of the aspects of the present invention, the following effects are exerted.

In the synthetic resin welded body according to the aspect of the invention, it is possible to make only a portion to be welded of the absorption-side synthetic resin part likely to melt in the laser welding.

In the synthetic resin welded body according to the aspect of the invention, it is possible to make only the portion to be welded of the oil passage forming member likely to melt in the laser welding.

In the method of manufacturing the synthetic resin welded body according to the other aspect of the invention, it is possible to make only the portion to be welded of the absorption-side synthetic resin part likely to melt in the laser welding.

In the method of manufacturing the synthetic resin welded body according to the other aspect of the invention, it is possible to make only the portion to be welded of the oil passage forming member likely to melt in the laser welding.

### BRIEF DESCRIPTION OF DRAWINGS

Fig. 1 is a cross-sectional view of an inside of a cylinder head cover of an engine and shows a state of use of a baffle plate and an oil passage forming member according to an embodiment of the present invention.
Fig. 2 is a bottom view of the baffle plate.
Fig. 3 is a plan view of the oil passage forming member.
Fig. 4 is a plan view of a welded body formed by the baffle plate and the oil passage forming member.
Fig. 5 is a cross-sectional view taken along line A-A in Fig. 4.
Fig. 6 is a flowchart of a method of manufacturing the welded body formed by the baffle plate and the oil passage forming member according to the embodiment of the invention.
Fig. 7 is a partial cross-sectional view showing a state of the baffle plate and the oil passage forming member before laser welding.
Fig. 8 is a partial cross-sectional view showing a state of the baffle plate and the oil passage forming member after the laser welding.
Fig. 9 is a cross-sectional view of a welded body formed by a baffle plate and an oil passage forming member according to a second embodiment of the invention.
Fig. 10 is a cross-sectional view of a welded body formed by a baffle plate and an oil passage forming member according to a third embodiment of the invention.
Fig. 11 is a cross-sectional view of a welded body formed by a baffle plate and an oil passage forming member according to a fourth embodiment of the invention.
Fig. 12 is a cross-sectional view of a welded body formed by a baffle plate and an oil passage forming member according to a fifth embodiment of the invention.

### DESCRIPTION OF EMBODIMENTS

Directions shown by arrows U, D, F, B, L, and R in the diagrams are respectively defined as an upward direction, a downward direction, a forward direction, a backward direction, a leftward direction, and a rightward direction and a description will be given below.

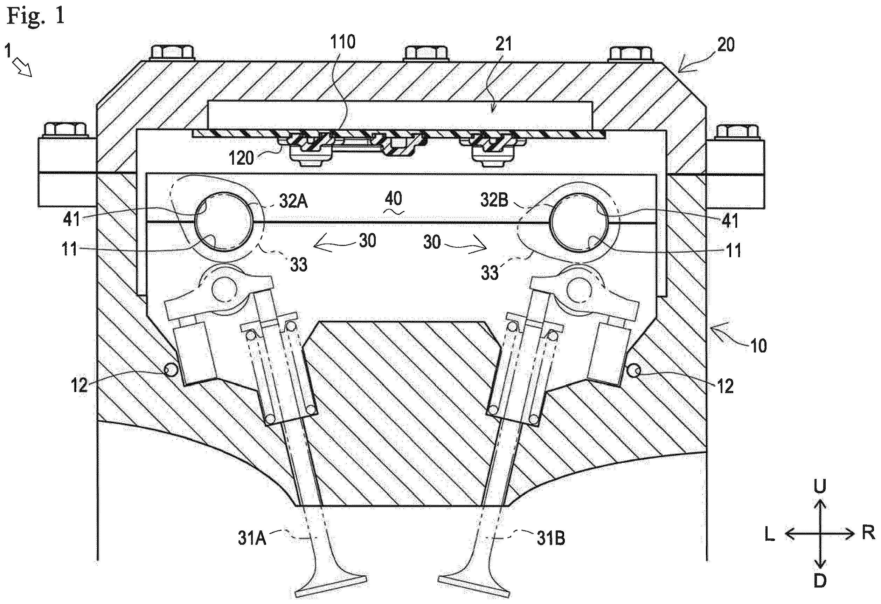

First, by using Fig. 1, a structure of an engine 1 including a baffle plate 110 and an oil passage forming member 120 according to an embodiment of the present invention will be described.

The engine 1 according to the embodiment includes valve gears 30, which will be described later, on both of an intake side and an exhaust side. Because structures of the valve gears 30 on the intake side and the exhaust side are substantially the same, the structure on the exhaust side (the structure on a left side in Fig. 1) will be mainly described and the structure on the intake side (the structure on a right side in Fig. 1) will be omitted appropriately for convenience of description.

The engine 1 mainly includes a cylinder head 10, a cylinder head cover 20, the valve gear 30, a cam cap 40, the baffle plate 110, and the oil passage forming member 120.

The cylinder head 10 along with a cylinder block (not shown) forms a main structural body of the engine 1. The cylinder head 10 is fixed to an upper portion of the cylinder block. The cylinder head 10 mainly includes cylinder head-side bearing portions 11 and oil galleries 12.

The cylinder head-side bearing portion 11 supports an exhaust-side camshaft 32A (described later) from below so that the exhaust-side camshaft 32A can rotate. The cylinder head-side bearing portion 11 is formed in a left portion of the cylinder head 10 to form a semicircular recess with an upper side open in front view.

The oil gallery 12 is an oil passage for feeding lubricant to respective portions of the engine 1. The oil gallery 12 is formed to pass through a left wall of the cylinder head 10 in a front-back direction.

The cylinder head cover 20 covers an upper portion of the cylinder head 10. The cylinder head cover 20 is formed in a shape of a bowl with a lower side open. The cylinder head cover 20 is placed on the upper portion of the cylinder head 10 and suitably fixed with bolts or the like. The baffle plate 110 (described later) is mounted to an inner side of the cylinder head cover 20 to form an oil separator chamber 21. The oil separator chamber 21 can store blow-by gas and cause the gas to flow back to an intake system after carrying out oil dropping.

The valve gear 30 is for opening and closing exhaust ports (not shown) of the engine 1 at predetermined times. The valve gear 30 mainly includes exhaust valves 31A and the exhaust-side camshaft 32A.

The exhaust valves 31A are for opening and closing the exhaust ports (not shown) of the engine 1. Each of the exhaust valves 31A is disposed with its longitudinal direction oriented substantially in a vertical direction. A lower end of the exhaust valve 31A extends to the exhaust port. A middle portion of the exhaust valve 31A in the vertical direction is inserted through the cylinder head 10 to be able to slide.

The exhaust-side camshaft 32A is for driving the valve gear 30 for opening and closing. The exhaust-side camshaft 32A is placed on the cylinder head-side bearing portion 11 of the cylinder head 10 with its longitudinal direction oriented substantially in the front-back direction. The exhaust-side camshaft 32A includes cams 33.

Each of the cams 33 is a portion formed in a plate shape having an irregular distance from a center of rotation (center of the exhaust-side camshaft 32A) to an outer periphery. The cam 33 is disposed in a position corresponding to each of cylinders in the front-back direction. The cam 33 is disposed above the exhaust valve 31A. The cam 33 rotates about an axial center of the exhaust-side camshaft 32A to thereby cause the exhaust valve 31A to slide in the vertical direction with respect to the cylinder head 10.

The cam cap 40 is fixed to the upper portion of the cylinder head 10 to retain the exhaust-side camshaft 32A between the cylinder head 10 and the cam cap 40. The cam cap 40 is formed in a substantially rectangular parallelepiped shape with its longitudinal direction oriented in the left-right direction. The cam cap 40 mainly includes a cam cap-side bearing portion 41.

The cam cap-side bearing portion 41 supports the exhaust-side camshaft 32A from above so that the exhaust-side camshaft 32A can rotate. The cam cap-side bearing portion 41 is formed in a left portion of the cam cap 40 to form a semicircular recess with a lower side open in front view. The cam cap-side bearing portion 41 is formed in a position facing the cylinder head-side bearing portion 11 in the cylinder head 10 and cooperates with the cylinder head-side bearing portion 11 to rotatably support the exhaust-side camshaft 32A.

Although it is not described concretely, the engine 1 having the above-described structure includes, as an intake-side structure (structure on a right side in Fig. 1), the (intake-side) valve gear 30 for opening and closing intake ports (not shown) of the engine 1 at predetermined times. The intake-side valve gear 30 includes intake valves 31B for opening and closing the intake ports (not shown) of the engine 1 and an intake-side camshaft 32B for driving the intake-side valve gear 30 for opening and closing as shown in Fig. 1.

By using Figs. 1 to 5, structures of the baffle plate 110 and the oil passage forming member 120 will be described below in detail.

The baffle plate 110 shown in Figs. 1, 2, 4, and 5 is a member for defining the oil separator chamber 21. The baffle plate 110 is formed in a rectangular plate shape. The baffle plate 110 is mounted to the inner side of the cylinder head cover 20. The baffle plate 110 is disposed with its longitudinal direction oriented in the front-back direction and its plate faces facing in the vertical direction.

The baffle plate 110 is made of laser light transmissive synthetic resin. It is essential only that the baffle plate 110 have transmittance of the laser light to be used (laser light of a predetermined wavelength) and the baffle plate 110 having the laser light transmittance not lower than 25% may be used, for example. To put it concretely, as material of the baffle plate 110, polyester resin such as polybutylene terephthalate (PBT) and polyethylene terephthalate (PET), polyolefin resin such as polyethylene and polypropylene, polyamide resin, vinyl chloride resin, fluorine resin, and the like can be used.

The baffle plate 110 includes a welded area 111 and a non-welded area 112 (is divided into the welded area 111 and the non-welded area 112). Details of the welded area 111 and the non-welded area 112 will be described later.

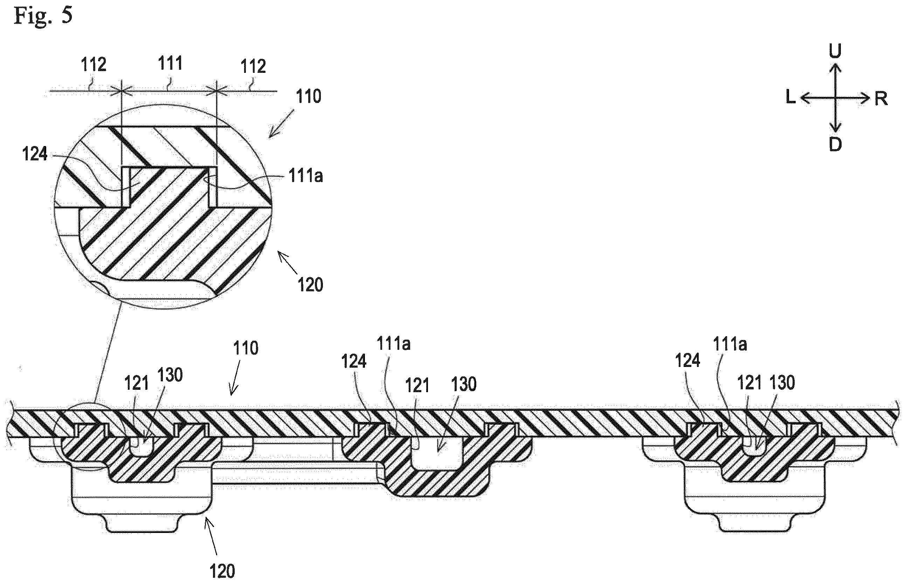

The oil passage forming member 120 shown in Figs. 1 and 3 to 5 is a member for forming a lubricant feed path for feeding the lubricant to predetermined lubrication portions. The oil passage forming member 120 has such an outside shape in plan view as to surround a periphery of the lubricant feed path. The oil passage forming member 120 is formed in a plate shape with its central portion (portion corresponding to the lubricant feed path) protruding downward (see Fig. 5). The oil passage forming member 120 is fixed to a lower face of the baffle plate 110.

The oil passage forming member 120 is made of laser light absorbing synthetic resin. It is essential only that the oil passage forming member 120 have absorbance of the laser light to be used and the oil passage forming member 120 having the transmittance of the laser light not higher than 5% can be used, for example. To put it concretely, as material of the oil passage forming member 120, the same synthetic resin as that used for the above-described baffle plate 110 into which an absorbent such as carbon black for increasing the absorbance is mixed can be used.

The oil passage forming member 120 has a recessed portion 121, an introduction port 122, discharge ports 123, and a welding portion 124.

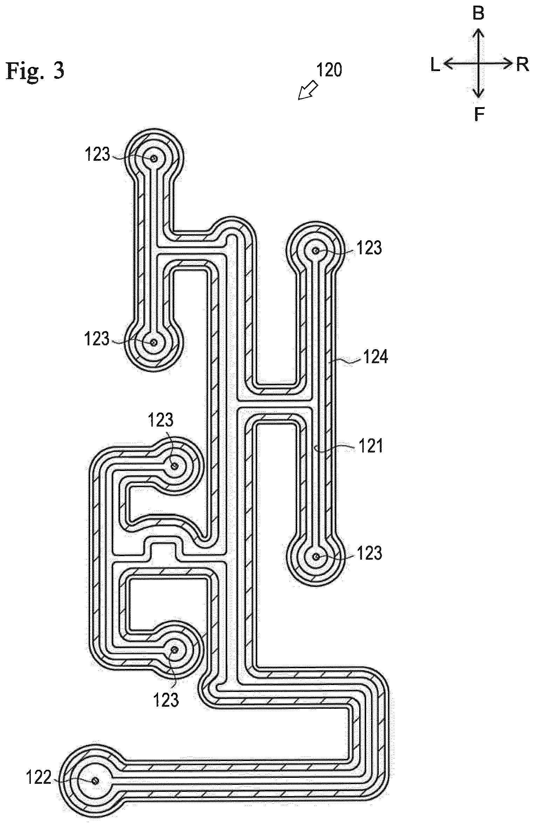

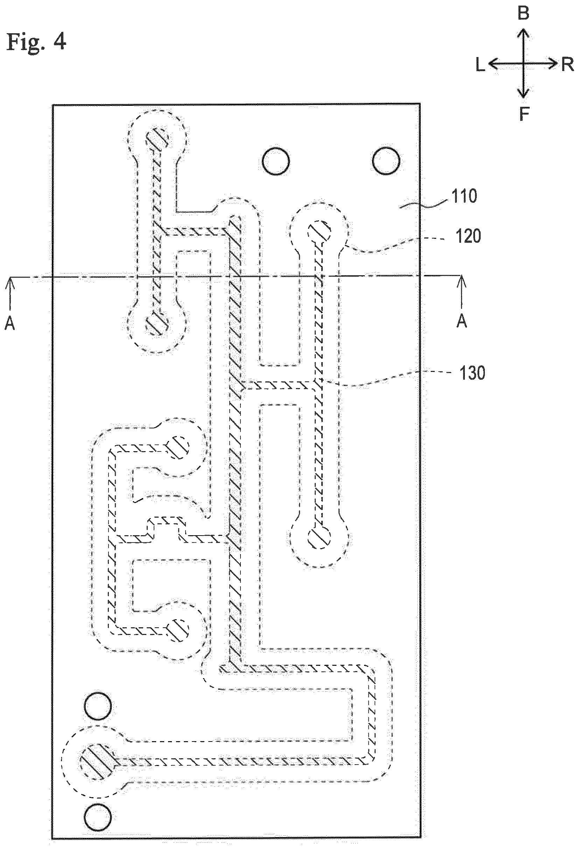

The recessed portion 121 shown in Figs. 3 and 5 is formed with its portion corresponding to a feed passage of the lubricant recessed downward (to an opposite side from the baffle plate 110). The recessed portion 121 is branched so as to form end portions in positions corresponding to predetermined lubrication portions. With the oil passage forming member 120 fixed to the lower face of the baffle plate 110, the recessed portion 121 forms an oil passage 130 (see Fig. 5) between the baffle plate 110 and the oil passage forming member 120. In other words, the recessed portion 121 forms side walls and a bottom wall of the oil passage 130. The oil passage 130 is formed in a hatched area in Fig. 4 so as to feed the lubricant from the oil gallery 12 fed through a predetermined oil passage to the predetermined lubrication portions (e.g., the cams 33).

The introduction port 122 shown in Fig. 3 is a portion for introducing the lubricant into the oil passage 130. The introduction port 122 is formed to extend downward from a bottom face of the recessed portion 121 to pass through the oil passage forming member 120 in the vertical direction. The introduction port 122 is formed near a front left end portion of the oil passage forming member 120. The introduction port 122 communicates with the oil gallery 12 through the predetermined oil passage.

The discharge ports 123 shown in Fig. 3 are portions for discharging the lubricant flowing through the oil passage 130 to the predetermined lubrication portions. The discharge ports 123 are formed to extend downward from the bottom face of the recessed portion 121 to pass through the oil passage forming member 120 in the vertical direction. The discharge ports 123 are respectively formed at the respective end portions (positions corresponding to the predetermined lubrication portions) of the recessed portion 121 (oil passage 130). To put it concretely, the discharge ports 123 are formed above the cams 33.

The welding portion 124 shown in Figs. 3 and 5 are portions where the oil passage forming member 120 is welded to the baffle plate 110. The welding portion 124 is formed in a protruding shape on an upper face of the oil passage forming member 120. The welding portion 124 is formed in a hatched area in Fig. 3 to extend from a position near a front end to a position near a back end of the oil passage forming member 120 in plan view. To put it concretely, the welding portion 124 is formed to lay a closed trail on an outer side of the recessed portion 121 along the recessed portion 121 in plan view. In a state in which the baffle plate 110 and the oil passage forming member 120 are integrated with each other by laser welding, a height (vertical length) of the welding portion 124 is substantially equal to a depth of a recess-shaped portion 111a (described later) (see Fig. 5).

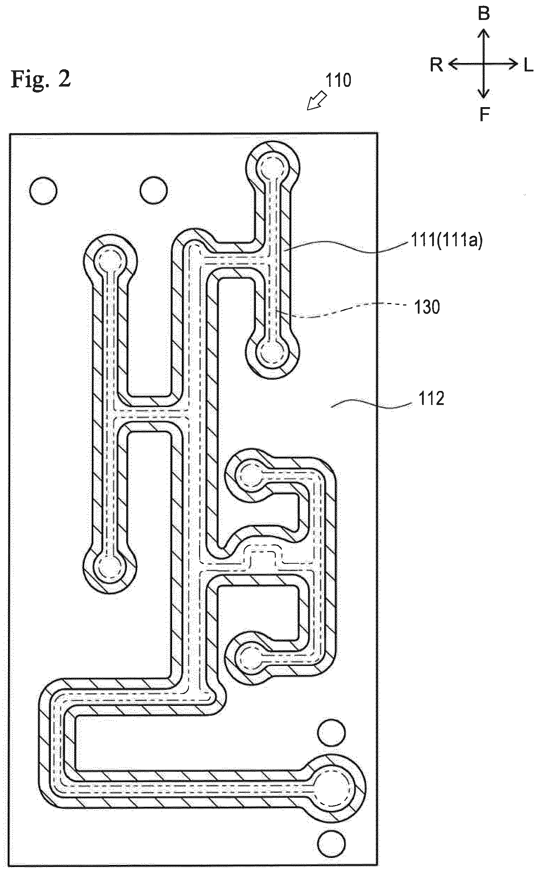

The welded area 111 shown in Figs. 2 and 5 is an area at which the baffle plate 110 is welded to the welding portion 124 of the oil passage forming member 120. The welded area 111 is formed in a hatched area in Fig. 2 to extend from a position near a front end to a position near a back end of the baffle plate 110 in plan view or bottom view. To put it concretely, the welded area 111 is formed to lay a closed trail on an outer side of the oil passage 130 along the oil passage 130 in plan view or bottom view. The welded area 111 is formed to have substantially the same shape in bottom view as a shape of the welding portion 124 in plan view. The welded area 111 is formed to have a dimension in a width direction (dimension in a left-right direction of the welded area 111 in an enlarged cross-sectional view shown in Fig. 5) which is substantially the same as or slightly greater than a dimension in a width direction of the welding portion 124 (dimension in the left-right direction of the welding portion 124 in the enlarged cross-sectional view shown in Fig. 5).

The recess-shaped portion 111a is formed throughout the welded area 111. Conversely, the area where the recess-shaped portion 111a is formed is the welded area 111.

The recess-shaped portion 111a is a portion formed in a recessed groove shape throughout the welded area 111. The recess-shaped portion 111a is formed in the lower face of the baffle plate 110. A shape of the recess-shaped portion 111a in bottom view is the same as the shape of the welded area 111 in bottom view. The recess-shaped portion 111a houses the welding portion 124.

In this manner, because the recess-shaped portion 111a is formed in the welded area 111, the welded area 111 is formed to be smaller in thickness (vertical length) than the other area (non-welded area 112 described later). As a result, the welded area 111 is higher in laser transmittance than the non-welded area 112.

The non-welded area 112 is the area other than the welded area 111. The non-welded area 112 includes an area on an inner side of the welded area 111 (area surrounded with the welded area 111) and an area on an outer side of the welded area 111 in plan view or bottom view. The non-welded area 112 is not welded to the oil passage forming member 120. A portion of the non-welded area 112 where the oil passage forming member 120 is disposed (portion around the welded area 111) comes in contact with the oil passage forming member 120.

By laying the baffle plate 110 and the oil passage forming member 120 formed as described above over each other and laser-welding them to each other, a welded body (synthetic resin welded body) is formed.

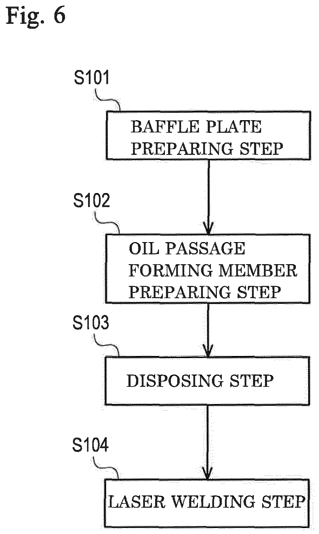

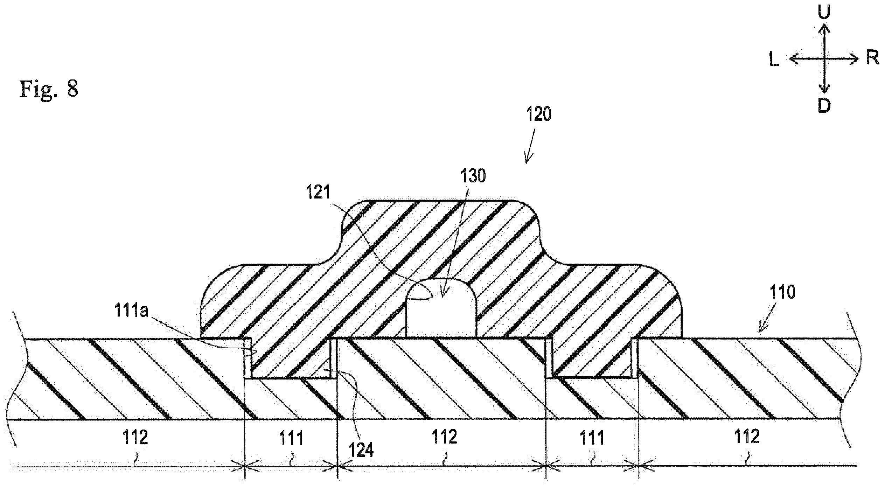

By using Figs. 6 to 8, a method of manufacturing the welded body formed by the baffle plate 110 and the oil passage forming member 120 will be described below in detail. In a manufacturing process of the manufacturing method according to the embodiment, the baffle plate 110 is disposed on a lower side and the oil passage forming member 120 is disposed on an upper side.

The method of manufacturing the welded body formed by the baffle plate 110 and the oil passage forming member 120 according to the embodiment of the invention includes a baffle plate preparing step, an oil passage forming member preparing step, a disposing step, and a laser welding step (see Fig. 6).

In the baffle plate preparing step, the baffle plate 110 is prepared (step S101). Because details of the baffle plate 110 are as described above, the step will not be described here.

In the oil passage forming member preparing step, the oil passage forming member 120 is prepared (step S102). Because the welding portion 124 of the oil passage forming member 120 is melted by the laser light in the laser welding step (described later), the height of the welding portion 124 is greater than the depth of the recess-shaped portion 111a. Because other details of the oil passage forming member 120 are as described above, they will not be described here.

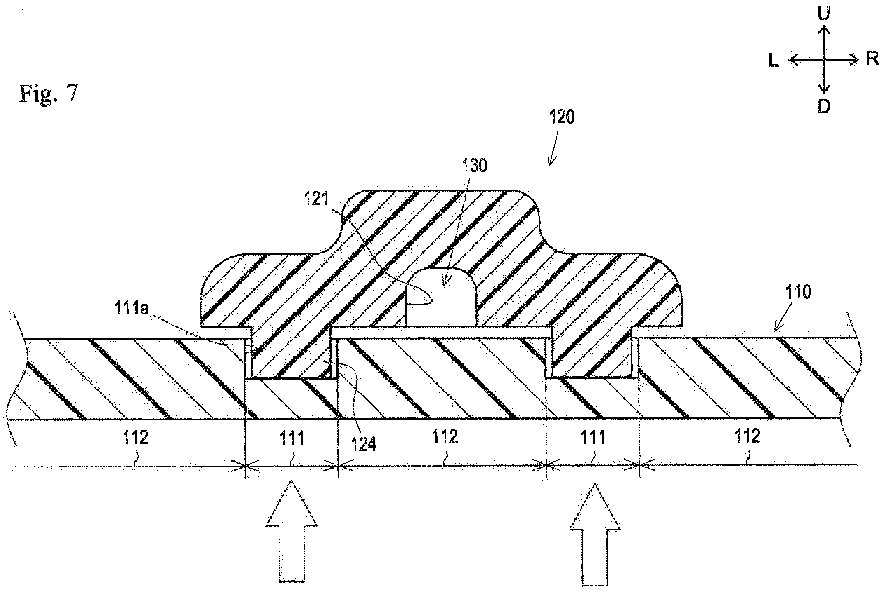

In the disposing step, the baffle plate 110 and the oil passage forming member 120 are laid over each other (step S103). At this time, the baffle plate 110 is disposed with its face having the recess-shaped portion 111a facing upward. The oil passage forming member 120 is disposed with its face having the welding portion 124 facing downward. The oil passage forming member 120 is disposed above the baffle plate 110. The oil passage forming member 120 is disposed so that the welding portion 124 is housed in the recess-shaped portion 111a and that a top face of the welding portion 124 (face facing downward in Fig. 7) comes in contact with a bottom face of the recess-shaped portion 111a. At this time, the lower face of the oil passage forming member 120 (face on which the welding portion 124 is formed) is not in contact with the upper face of the baffle plate 110 (face in which the recess-shaped portion 111a is formed) and a clearance is formed between both the faces (see Fig. 7).

In the laser welding step, the baffle plate 110 and the oil passage forming member 120 are laser-welded to each other (step S104). The laser light is radiated toward the welding portion 124 from below the baffle plate 110 (see arrows in Fig. 7). A light source of the laser light is not especially restricted and a semiconductor laser, a YAG laser, or the like may be used.

Because the baffle plate 110 is made of the laser light transmissive synthetic resin, most of the laser light radiated from below the baffle plate 110 is not absorbed by the baffle plate 110 and passes through the baffle plate 110. Then the laser light is absorbed by the oil passage forming member 120 made of the laser light absorbing synthetic resin. To put it concretely, the laser light is absorbed by the welding portion 124.

Energy of the laser light absorbed by the welding portion 124 is converted into heat. In this way, the welding portion 124 is heated. When a temperature of the welding portion 124 increases, a portion near the bottom face of the recess-shaped portion 111a in contact with the welding portion 124 is also heated due to heat transfer. As a result, a melted layer is formed at a contact portion between the oil passage forming member 120 and the baffle plate 110 (between the top face of the welding portion 124 and the bottom face of the recess-shaped portion 111a). The melted layer cools down and sets and, as a result, the oil passage forming member 120 and the baffle plate 110 become welded to each other.

The radiation of the laser light is carried out until the welding portion 124 is melted and the lower face of the oil passage forming member 120 comes in contact with the upper face of the baffle plate 110 (upper face of the non-welded area 112).

As described above, because the welded area 111 of the baffle plate 110 is thinner than the non-welded area 112, the laser transmittance of the welded area 111 is higher than that of the non-welded area 112. In other words, the welded area 111 is more likely to transmit the laser than the non-welded area 112. Therefore, the laser light radiated toward the welding portion 124 from below the baffle plate 110 can easily reach the welding portion 124 through the welded area 111. Therefore, it is possible to shorten the time required to melt the welding portion 124.

Here, displacement of a laser light scanning position and increase in a laser light radiation diameter may cause displacement of a laser light radiation position in the left-right direction with respect to the welding portion 124. At this time, the laser light displaced from the welding portion 124 tries to pass through the non-welded area 112 first. Because the non-welded area 112 is thicker than the welded area 111, the non-welded area 112 is lower in laser transmittance than the welded area 111. Therefore, the laser light is less likely to pass through the non-welded area 112. As a result, it is possible to suppress the radiation of the laser light to a portion of the oil passage forming member 120 other than the welding portion 124 (portion around the welding portion 124), which suppresses melting of the portion of the oil passage forming member 120 other than the welding portion 124. Consequently, it becomes likely to melt only the welding portion 124.

As described above, the welded body (synthetic resin welded body) according to the embodiment includes the laser light absorbing oil passage forming member 120 (absorption-side synthetic resin part) and the laser light transmissive baffle plate 110 (transmission-side synthetic resin part) which is laid over the oil passage forming member 120 and laser-welded in this state. The baffle plate 110 is formed so that the welded area 111 which is laser-welded to the oil passage forming member 120 is higher in laser transmittance than the non-welded area 112 which is the other area.

With this structure, it is possible to make only the welding portion 124 (portion to be welded) of the oil passage forming member 120 likely to melt in the laser welding.

In the baffle plate 110 in the welded body according to the embodiment, the welded area 111 is formed to be smaller in thickness than the non-welded area 112 so that the welded area 111 is higher in laser transmittance than the non-welded area 112.

With this structure, it is possible to make only the welding portion 124 (portion to be welded) of the oil passage forming member 120 likely to melt in the laser welding.

In the welded body according to the embodiment, the baffle plate 110 is the baffle plate 110 which is disposed on the cylinder head cover 20 and the oil passage forming member 120 is the oil passage forming member 120 which includes the recessed portion 121 recessed to the opposite side from the baffle plate 110 and which is fixed to the one face of the baffle plate 110 to thereby form the oil passage 130 with the recessed portion 121 and the baffle plate 110.

With this structure, it is possible to make only the welding portion 124 (portion to be welded) of the oil passage forming member 120 likely to melt in the laser welding.

The method of manufacturing the welded body according to the embodiment includes the oil passage forming member preparing step (absorption-side synthetic resin part preparing step) of preparing the laser light absorbing oil passage forming member 120 (absorption-side synthetic resin part), the baffle plate preparing step (transmission-side synthetic resin part preparing step) of preparing the laser light transmissive baffle plate 110 (transmission-side synthetic resin part), the disposing step of laying the oil passage forming member 120 and the baffle plate 110 over each other, and the laser welding step of radiating the laser light from the side of the baffle plate 110 to melt the oil passage forming member 120 to thereby weld the oil passage forming member 120 and the baffle plate 110 to each other to obtain the welded body. The baffle plate 110 is formed so that the welded area 111 which is laser-welded to the oil passage forming member 120 is higher in laser transmittance than the non-welded area 112 which is the other area.

With this structure, it is possible to make only the welding portion 124 (portion to be welded) of the oil passage forming member 120 likely to melt in the laser welding.

In the baffle plate 110 in the method of manufacturing the welded body according to the embodiment, the welded area 111 is formed to be smaller in thickness than the non-welded area 112 so that the welded area 111 is higher in laser transmittance than the non-welded area 112.

With this structure, it is possible to make only the welding portion 124 (portion to be welded) of the oil passage forming member 120 likely to melt in the laser welding.

In the method of manufacturing the welded body according to the embodiment, the baffle plate 110 is the baffle plate 110 which is disposed on the cylinder head cover 20 and the oil passage forming member 120 is the oil passage forming member 120 which includes the recessed portion 121 recessed to the opposite side from the baffle plate 110 and which is fixed to the one face of the baffle plate 110 to thereby form the oil passage 130 with the recessed portion 121 and the baffle plate 110.

With this structure, it is possible to make only the welding portion 124 (portion to be welded) of the oil passage forming member 120 likely to melt in the laser welding.

Although the embodiment of the invention has been described above, the invention is not restricted to the above-described structure and can be changed in various ways without departing from the scope of the invention described in the claims.

For example, though the synthetic resin welded body formed by the baffle plate 110 and the oil passage forming member 120 and the method of manufacturing the same have been described in the embodiment, the invention is not restricted to them. The invention may be applied to any synthetic resin welded body formed by an absorption-side synthetic resin part having absorbance of laser light and a transmission-side synthetic resin part having transmittance of the laser light.

Although the type of the engine for which the baffle plate 110 and the oil passage forming member 120 are used is not specified in the embodiment, the baffle plate 110 and the oil passage forming member 120 according to the embodiment can be applied to any type of engine.

Although the entire baffle plate 110 is made of the synthetic resin having the transmittance of the laser light and the entire oil passage forming member 120 is made of the synthetic resin having the absorbance of the laser light in the embodiment, the invention is not restricted to it. It is essential only that the portions related to the welding (the welding portion 124 and the recess-shaped portion 111a) of the baffle plate 110 and the oil passage forming member 120 be respectively made of the above-described materials.

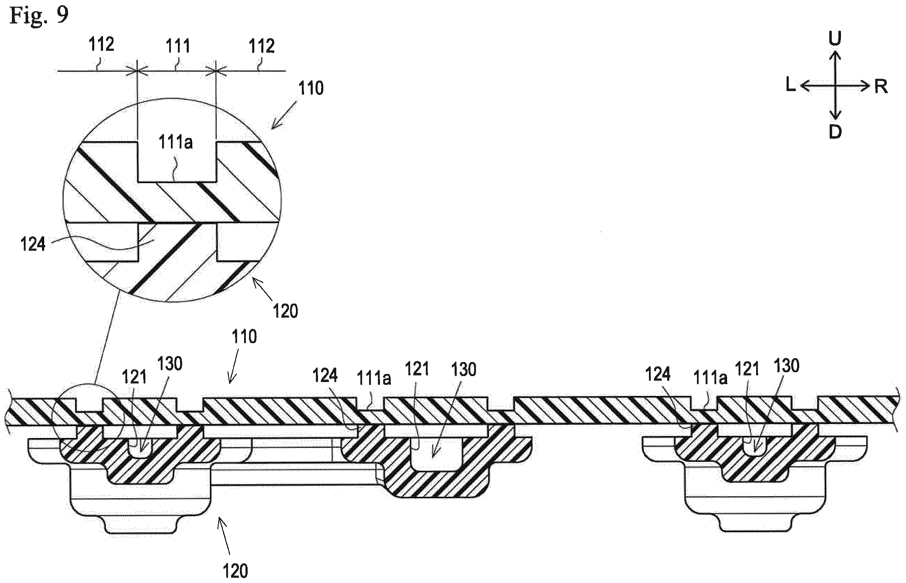

Although the recess-shaped portion 111a is formed in the lower face of the baffle plate 110 (see Fig. 5) in the embodiment, the invention is not restricted to it. For example, as in a second embodiment shown in Fig. 9, a recess-shaped portion 111a may be formed in an upper face of a baffle plate 110. In the second embodiment, a welding portion 124 of an oil passage forming member 120 is not housed in the recess-shaped portion 111a and comes in contact with a lower face of the baffle plate 110. Alternatively, recess-shaped portions 111a may be formed respectively in a lower face and an upper face of a baffle plate 110.

Although the welded area 111 is formed to be smaller in thickness than the non-welded area 112 so that the welded area 111 is higher in laser transmittance than the non-welded area 112 in the embodiment, the structure for making the laser transmittance of the welded area 111 higher than that of the non-welded area 112 is not restricted to it. Other embodiments of the welded area 111 and the non-welded area 112 according to the invention will be described below.

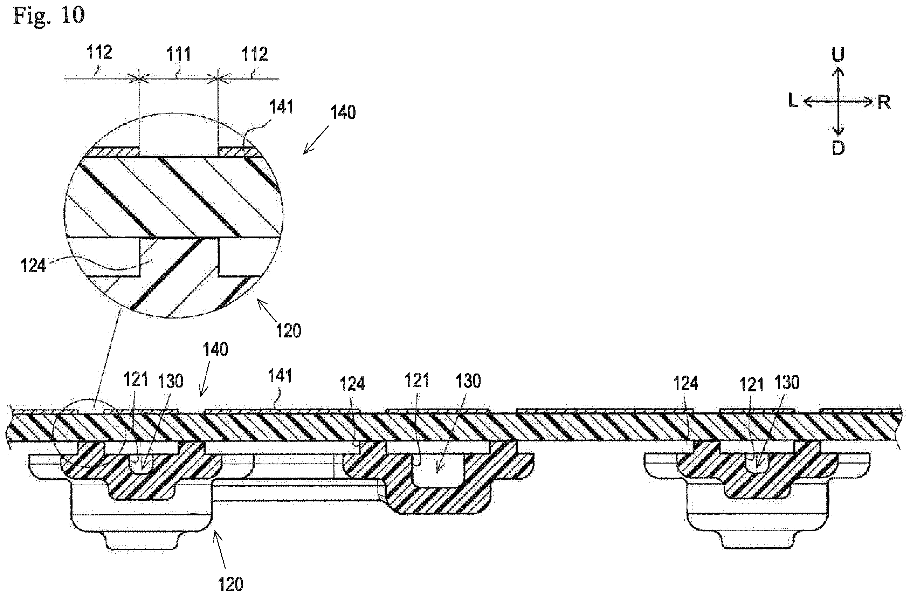

A baffle plate 140 according to the third embodiment shown in Fig. 10 is different from the baffle plate 110 according to the first embodiment (see Fig. 5) in that the baffle plate 140 includes a colored portion 141 in place of the recess-shaped portion 111a. Therefore, structures of the baffle plate 140 which are the same as those of the baffle plate 110 according to the first embodiment will be provided with the same reference signs and will not be described below.

The colored portion 141 is a colored portion of an upper face of the baffle plate 140 in a non-welded area 112. The colored portion 141 is formed by coating the upper face of the baffle plate 140 with coloring material. To put it concretely, the colored portion 141 is formed by applying colored paint to the non-welded area 112 on the upper face of the baffle plate 140.

Because the colored portion 141 is formed in the non-welded area 112 in this manner, the welded area 111 is formed to be higher in laser transmittance than the non-welded area 112. Therefore, it is possible to suppress melting of a portion of an oil passage forming member 120 around a welding portion 124 in radiating laser. As a result, it is possible to make only the welding portion 124 likely to melt.

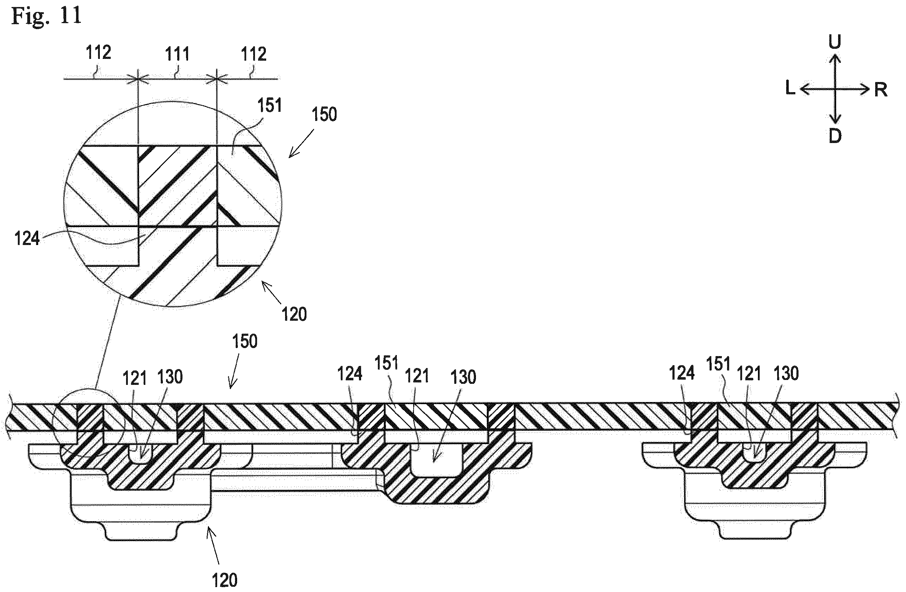

A baffle plate 150 according to the fourth embodiment shown in Fig. 11 is different from the baffle plate 140 (see Fig. 10) according to the third embodiment in that the baffle plate 150 includes a colored portion 151 in place of the colored portion 141. Therefore, structures of the baffle plate 150 which are the same as those of the baffle plate 140 according to the third embodiment will be provided with the same reference signs and will not be described below.

The colored portion 151 is a portion of the baffle plate 150 which is colored from an upper face to a lower face in a non-welded area 112. The colored portion 151 is formed by using colored synthetic resin including coloring material in advance as material of the non-welded area 112. At this time, transparent synthetic resin is used as material of a welded area 111. The baffle plate 150 according to the fourth embodiment is formed by two-color molding.

Because the colored portion 151 is formed in the non-welded area 112 in this manner, the welded area 111 is formed to be smaller in thickness than the non-welded area 112. Therefore, it is possible to suppress melting of a portion of an oil passage forming member 120 around a welding portion 124 in radiating laser. As a result, it is possible to make only the welding portion 124 likely to melt.

As described above, in each of the baffle plates 140 and 150 in welded bodies according to the third and fourth embodiments, the non-welded area 112 is colored so that the welded area 111 is higher in laser transmittance than the non-welded area 112.

With this structure, it is possible to make only the welding portion 124 (portion to be welded) of the oil passage forming member 120 likely to melt in the laser welding.

In each of the baffle plates 140 and 150 in methods of manufacturing the welded bodies according to the third and fourth embodiments, the non-welded area 112 is colored so that the welded area 111 is higher in laser transmittance than the non-welded area 112.

With this structure, it is possible to make only the welding portion 124 (portion to be welded) of the oil passage forming member 120 likely to melt in laser welding.

Although the third and fourth embodiments of the invention have been described above, the invention is not restricted to the above-described structures and can be changed in various ways without departing from the scope of the invention described in the claims.

For example, although the colored portion 141 is formed on the upper face of the baffle plate 140 in the non-welded area 112 in the third embodiment, the invention is not restricted to it. A colored portion 141 may be formed on a lower face of a baffle plate 140 in a non-welded area 112.

Although the colored portion 141 is formed by applying colored paint to the non-welded area 112 in the third embodiment, the invention is not restricted to it. A colored portion 141 may be formed by sticking a colored film to a non-welded area 112.

Although each of the colored portions 141 and 151 in the third and fourth embodiments is formed by coloring only the non-welded area 112, the invention is not restricted to it. Each of the colored portions 141 and 151 may be formed by coloring a welded area 111 with a color which is likely to transmit laser light and coloring a non-welded area 112 with a color which is less likely to transmit (more likely to absorb) the laser light than the color on the welded area 111. Alternatively, each of the colored portions 141 and 151 may be formed by coloring a welded area 111 with a lighter color (causing the welded area 111 to include less coloring material) and coloring a non-welded area 112 with a darker color (causing the non-welded area 112 to include more coloring material).

Although the baffle plate 150 is formed by the two-color molding in the fourth embodiment, the invention is not restricted to it. A baffle plate 150 may be formed by molding a welded area 111 and a non-welded area 112 separately and joining them together later.

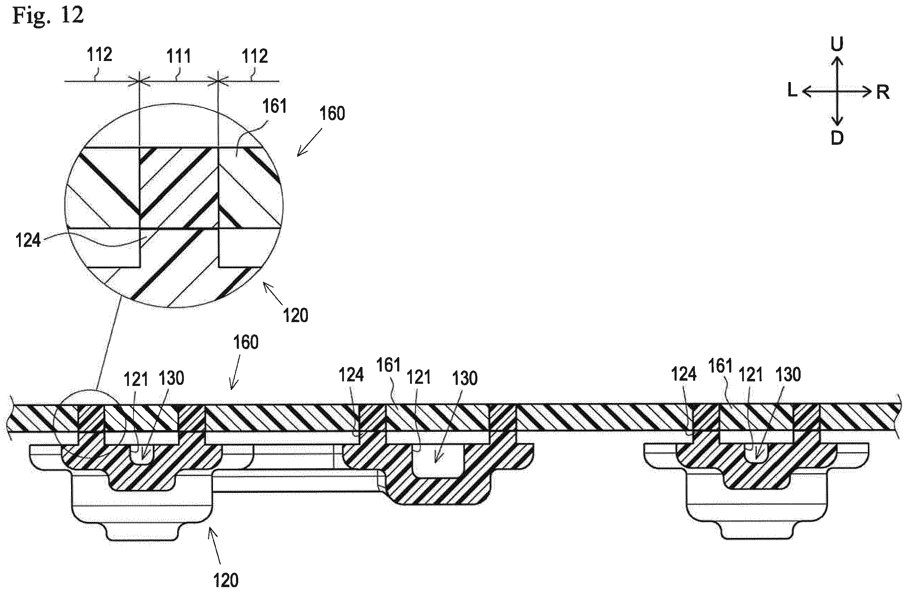

A baffle plate 160 according to the fifth embodiment shown in Fig. 12 is different from the baffle plate 150 (see Fig. 11) according to the fourth embodiment in that the baffle plate 160 includes a low-transmittance material portion 161 in place of the colored portion 151. Therefore, structures of the baffle plate 160 which are the same as those of the baffle plate 150 according to the fourth embodiment will be provided with the same reference signs and will not be described below.

The low-transmittance material portion 161 is a portion of the baffle plate 160 which is from an upper face to a lower face of the baffle plate 160 in a non-welded area 112 and made of material which is higher in laser transmittance than material for a welded area 111. As the material of the low-transmittance material portion 161, synthetic resin having lower laser transmittance than synthetic resin used for the welded area 111 is used. The low-transmittance material portion 161 is formed by two-color molding.

Because the low-transmittance material portion 161 is formed in the non-welded area 112 in this manner, the welded area 111 is formed to be higher in laser transmittance than the non-welded area 112. Therefore, it is possible to suppress melting of a portion of an oil passage forming member 120 around a welding portion 124 in radiating laser. As a result, it is possible to make only the welding portion 124 likely to melt.

As described above, in the baffle plate 160 in the welded body according to the fifth embodiment, the welded area 111 is made of the material which is higher in laser transmittance than material for the non-welded area 112 so that the welded area 111 is higher in laser transmittance than the non-welded area 112.

With this structure, it is possible to make only the welding portion 124 (portion to be welded) of the oil passage forming member 120 likely to melt in laser welding.

In the baffle plate 160 in a method of manufacturing a welded body according to the fifth embodiment, the welded area 111 is made of the material which is higher in laser transmittance than material for the non-welded area 112 so that the welded area 111 is higher in laser transmittance than the non-welded area 112.

With this structure, it is possible to make only the welding portion 124 (portion to be welded) of the oil passage forming member 120 likely to melt in laser welding.

Although the fifth embodiment of the invention has been described above, the invention is not restricted to the above-described structure and can be changed in various ways without departing from the scope of the invention described in the claims.

For example, although the baffle plate 160 is formed by the two-color molding in the fifth embodiment, the invention is not restricted to it. A baffle plate 160 may be formed by molding a welded area 111 and a non-welded area 112 separately and joining them together later.

### INDUSTRIAL APPLICABILITY

The present invention can be applied to a synthetic resin welded body formed by welding synthetic resin parts to each other and a method of manufacturing the same.

### REFERENCE SIGNS LIST

110: Baffle plate (Transmission-side synthetic resin part)
111: Welded area
111a: Recess-shaped portion
112: Non-welded area
120: Oil passage forming member (Absorption-side synthetic resin part)
121: Recessed portion
130: Oil passage

## Claims

1. A synthetic resin welded body comprising:
a laser light absorbing absorption-side synthetic resin part; and
a laser light transmissive transmission-side synthetic resin part which is laid over the absorption-side synthetic resin part and laser-welded in this state,
wherein the transmission-side synthetic resin part is formed so that a welded area which is laser-welded to the absorption-side synthetic resin part is higher in laser transmittance than a non-welded area which is the other area.

2. The synthetic resin welded body according to claim 1, wherein, in the transmission-side synthetic resin part, the welded area is formed to be smaller in thickness than the non-welded area so that the welded area is higher in laser transmittance than the non-welded area.

3. The synthetic resin welded body according to claim 1 or 2, wherein, in the transmission-side synthetic resin part, the non-welded area is colored so that the welded area is higher in laser transmittance than the non-welded area.

4. The synthetic resin welded body according to any one of claims 1 to 3, wherein, in the transmission-side synthetic resin part, the welded area is made of material which is higher in laser transmittance than material for the non-welded area so that the welded area is higher in laser transmittance than the non-welded area.

5. The synthetic resin welded body according to any one of claims 1 to 4, wherein
the transmission-side synthetic resin part is a baffle plate which is disposed on a cylinder head cover, and
the absorption-side synthetic resin part is an oil passage forming member which includes a recessed portion recessed to an opposite side from the baffle plate and which is fixed to one face of the baffle plate to thereby form an oil passage with the recessed portion and the baffle plate.

6. A method of manufacturing a synthetic resin welded body comprising:
an absorption-side synthetic resin part preparing step of preparing a laser light absorbing absorption-side synthetic resin part;
a transmission-side synthetic resin part preparing step of preparing a laser light transmissive transmission-side synthetic resin part;
a disposing step of laying the absorption-side synthetic resin part and the transmission-side synthetic resin part over each other; and
a laser welding step of radiating laser light from a side of the transmission-side synthetic resin part to melt the absorption-side synthetic resin part to thereby weld the absorption-side synthetic resin part and the transmission-side synthetic resin part to each other to obtain the synthetic resin welded body,
wherein the transmission-side synthetic resin part is formed so that a welded area which is laser-welded to the absorption-side synthetic resin part is higher in laser transmittance than a non-welded area which is the other area.

7. The method of manufacturing the synthetic resin welded body according to claim 6, wherein, in the transmission-side synthetic resin part, the welded area is formed to be smaller in thickness than the non-welded area so that the welded area is higher in laser transmittance than the non-welded area.

8. The method of manufacturing the synthetic resin welded body according to claim 6 or 7, wherein, in the transmission-side synthetic resin part, the non-welded area is colored so that the welded area is higher in laser transmittance than the non-welded area.

9. The method of manufacturing the synthetic resin welded body according to any one of claims 6 to 8, wherein, in the transmission-side synthetic resin part, the welded area is made of material which is higher in laser transmittance than material for the non-welded area so that the welded area is higher in laser transmittance than the non-welded area.

10. The method of manufacturing the synthetic resin welded body according to any one of claims 6 to 9, wherein
the transmission-side synthetic resin part is a baffle plate which is disposed on a cylinder head cover and
the absorption-side synthetic resin part is an oil passage forming member which includes a recessed portion recessed to an opposite side from the baffle plate and which is fixed to one face of the baffle plate to thereby form an oil passage with the recessed portion and the baffle plate.
